# EUROPEAN PATENT APPLICATION

(11) **EP 2 090 156 A1**
(43) Date of publication of application: **19.08.2009**
(21) Application number: 08253138.5
(22) Date of filing: 26.09.2008
(51) Int. Cl.: A01G 9/14, E04H 15/18, E04H 15/34

(54) **Frame structure for plastic sheet house and plastic sheet house**

(30) Priority: 13.02.2008 JP 2008031218
(71) Applicant: Nakagawa Electric Ind. Co., Ltd., Matsusaka-shi Mie 515-2132 (JP)
(72) Inventor: Kawanaka, Hiroshi, Mie 515-2132 (JP)
(74) Representative: Nicholls, Michael John

(57) **Abstract**

The frame structure (10) includes: a plurality of portal frames (14); a plurality of fastening portions (16) spaced apart by fixed spacing in the lengthwise direction; a plurality of longitudinal connecting members (12) assembled with attaching portions (62) of each portal frame (14) on the fastening portions (16); positioning means (18, 66) which is disposed between the fastening portions (16) and attaching portions (62) and position the plurality of portal frames (14); fastening means (70, 72, 74) which fastens the fastening portions (16) of the connecting members (12) to positioning means (18, 66) disposed between the fastening portions (16) and the attaching portions (62) and position the plurality of portal frames (14), and the attaching portions (62) of the portal frames (14) positioned by means of the positioning means (18, 66).

## Description

The present invention relates in general to a frame structure for a plastic sheet house and to a plastic sheet house. Specifically, the invention is concerned with an improved frame structure for a plastic sheet house constructed by connecting together connecting members and to a novel structure for a plastic sheet house having such a frame.

### Description of the Related Art

Easily assembled plastic sheet houses have been used to date as facilities for forced culture of agricultural and horticultural crops of various kinds, or as storage facilities for machines and equipment of various kinds or for various other items. Such plastic sheet houses are typically constructed by positioning in a row several frames of so-called portal shape, e.g. an arch or dome shape, at prescribed distance apart from each other and erecting them upright on the ground to form the frame of the structure; then stretching plastic sheeting such as vinyl sheeting or polyolefin sheeting over the frame.

One type of plastic sheet house of this kind known in the art has a frame structure like that disclosed in WO 2005/039270 A1, for example. Specifically, the frame of this plastic sheet house has a plurality of portal frames, and connecting members for connecting these together. The plurality of portal frames are positioned prescribed distances apart in a row and erected upright on the ground. The connecting members are then positioned extending between neighboring frames among the plurality of portal frames. Attachment members provided with multiple recessed portions are then positioned at the connecting sections of the connecting members and the portal frames so as to straddle them, and projections which have been integrally formed on the side faces of the portal frames and the connecting members respectively are pushed into the recessed portions of the attachment members. The attachment members are thereby attached to the portal frames and to the connecting members so that the portal frames and the connecting members are connected together via the attachment members. The frame is constructed by connecting together a plurality of portal frames and the connecting members in this way.

With this kind of plastic sheet house frame structure, the portal frames and the connecting members can be connected easily by a one-touch operation involving simply pushing the projections which have been integrally formed on the portal frames and the connecting members respectively into the recessed portions of the attachment members.

With a conventional frame structure like that described above, neighboring portal frames are connected to one another through connecting members which have been positioned one at a time between them, and thus assembling the frame required a laborious procedure of arranging the connecting members one at a time so that they are positioned at prescribed locations between neighboring portal frames, plus an additional procedure to respectively connect the connecting members to the portal frames. Thus, despite the fact that the portal frames and the connecting members are connectable through a one-touch operation as mentioned above, the procedure of assembling the frame was still quite cumbersome.

In order to make the process of assembling such a frame more efficient, it could easily be contemplated, for example, to employ connecting members which are elongated members that extend between all of multiple (three or more) portal frames in the direction in which the plurality of portal frames are spaced apart. However, with such a design there is a risk of uneven spacing between neighboring portal frames, giving the frame overall a poor appearance, and possibly causing variability in strength in the lengthwise direction of the frame.

It is therefore an object of the present invention to provide an improved frame structure for a plastic sheet house whereby a frame composed of a plurality of portal frames spaced apart by a prescribed distance and connected together can be assembled more easily and efficiently. It is yet another object of the present invention to provide a plastic sheet house having such a frame structure.

The above and/or optional objects of this invention may be attained according to at least one of the following modes of the invention. The following modes and/or elements employed in each mode of the invention may be adopted at any possible optional combinations. It is to be understood that the principle of the invention is not limited to these modes of the invention and combinations of the technical features, but may otherwise be recognized based on the teachings of the present invention disclosed in the entire specification and drawings or that may be recognized by those skilled in the art in the light of the present disclosure in its entirety.

A first mode of the present invention provides a plastic sheet house frame structure which includes: (a) a plurality of portal frames positioned in a row at a prescribed distance apart from one another and erected upright on the ground; (b) a plurality of connecting members composed of rigid, elongated members which span all of the plurality of portal frames in the direction in which the plurality of portal frames are spaced apart and which have fastening portions at a plurality of locations spaced apart by fixed spacing in the lengthwise direction thereof; (c) positioning means which, with the connecting members in a state of attachment at the fastening portions thereof to attaching portions which are provided respectively to the plurality of portal frames, position the plurality of portal frames so that the plurality of portal frames are positioned spaced apart by spacing equal to the spacing between neighboring fastening portions among the plurality thereof provided to the connecting members, and which are situated between the fastening portions of the connecting members and the attaching portions of the portal frames; and (d) fastening means which, with the plurality of portal frames positioned by the positioning means, fastens the plurality of fastening portions of the connecting members to the plurality of attaching portions of the portal frames; wherein the structure is assembled by fastening the plurality of connecting members to the plurality of portal frames so that the plurality of portal frames are connected together by the plurality of connecting members.

Specifically, according to this mode, the connecting members are composed of elongated members which span all of a plurality of portal frames which have been positioned spaced apart from each other in a row, thereby advantageously eliminating the need for a procedure to position the connecting members one by one between neighboring portal frames.

Moreover, in this mode, during attachment of the fastening portions of the connecting members to the attaching portions of the plurality of portal frames which have been positioned spaced apart from each other, by using the positioning means to carry out positioning of the plurality of portal frames, the need for a laborious positioning procedure in order to position the plurality of portal frames so that they are spaced apart by fixed spacing can be effectively eliminated.

A second mode of the present invention provides a plastic sheet house frame structure according to the first mode wherein the fastening portions of the connecting members are provided with two interlocking faces which face on another in the lengthwise direction of the connecting member; the positioning means is constituted by the two interlocking faces and the two side faces of the attaching portions which are positioned to either side of the plurality of portal frames in the direction of spacing apart thereof; and with the fastening portion of the connecting member in a state of attachment to the attaching portion of the portal frame, positioning of the plurality of portal frames is carried out by respective interlocking of the two interlocking faces with the two side faces of the attaching portions.

According to this mode, the positioning means is constituted with a relatively simple structure, and positioning of the plurality of portal frames can be carried out in a reliable manner.

A third mode of the present invention provides a plastic sheet house frame structure according to the first or second mode wherein at least the fastening portion of the connecting member or the attaching portion of the portal frame is furnished with a first positioning portion which is composed of a projection, while at least the other is furnished with a second positioning portion which is composed of an apertured or recessed portion into which the first positioning portion is insertable; the positioning means is constituted by the first positioning portion and the second positioning portion; and with the fastening portion of the connecting member in a state of attachment to the attaching portion of the portal frame, positioning of the plurality of portal frames in the lengthwise direction is carried out by inserting the first positioning portion into the second positioning portion.

With this mode as well, the positioning means is constituted with a relatively simple structure, and positioning of the plurality of portal frames can be carried out in a reliable manner.

A fourth mode of the present invention provides a plastic sheet house frame structure according to any of the first to third modes wherein, the fastening means is constituted to include a clamping member which, with the fastening portion of the connecting member in a state of attachment to the attaching portion of the portal frame, will hold the fastening portion clamped between itself and the attaching portion; a first mounting portion composed of a projection which has been provided to at least either the clamped member or the attaching portion of the portal frame; and a second mounting portion composed of a recessed or tubular portion provided to the other for mounting the clamping member onto the attaching portion through force fitting of the first mounting portion; and wherein with the clamping member clamping the fastening portion between itself and the attaching portion, the fastening portion of the connecting member is fastened to the attaching portion of the portal frame by mounting the clamped member onto the attaching portion by force fitting the first mounting portion into the second mounting portion.

According to this mode, with the fastening portions of the connecting members in a state of attachment to the attaching portions of the portal frames, the clamping member can be mounted onto the attaching portion by a one-touch operation of simply force fitting the first mounting portion into the second mounting portion; and fastening of the fastening portions of the connecting members to the attaching portions of the portal frames can be accomplished very quickly and easily. Ease of operation during assembly of the frame can be enhanced effectively thereby.

A fifth mode of the present invention provides a plastic sheet house frame structure according to the fourth mode wherein at least either the clamping member which is mounted onto the attaching portion of the portal frames, or the fastening portion of the connecting member, is provided with a third positioning portion composed of a projection; at least the other thereof is provided with a fourth positioning portion composed of an apertured or recessed portion into which the third positioning portion is insertable; the positioning means is constituted by the third positioning projection and the fourth positioning portion; and with the fastening portion of the connecting member in a state of attachment to the attaching portion of the portal frame, positioning of the plurality of portal frames in the lengthwise direction is carried out by inserting the third positioning portion into the fourth positioning portion.

According to this mode, there are formed members and regions which constitute positioning means for the fastening portion of the connecting member with respect to the clamping member which is mounted on the attaching portion of the portal frame. Accordingly, there is no need for constituent members or constituent regions of the positioning means to be formed directly on the attaching portion of the portal frame. For this reason, the structure of the attaching portion of the portal frame, and hence of the portal frame as a whole, may be advantageously simplified and streamlined as compared to case where the constituent members or constituent regions of positioning means are formed directly on the attaching portion of each portal frame by being integrally formed therewith, for example. Moreover, in this mode, the clamping member which is mounted onto to the attaching portion of the portal frame will be furnished with either a third positioning portion or a fourth positioning portion, and thus through the agency of the clamping member positioning means will be provided between the portal frame attaching portion and the connecting member fastening portion.

A sixth mode of the present invention provides a plastic sheet house frame structure according to any of the first to fifth modes wherein at least either the fastening portion of the connecting member or the attaching portion of the portal frame is provided with a first locking portion; at least the other of the fastening portion of the connecting member or the attaching portion of the portal frame is provided with a second locking portion which, with the fastening portion attached to the attaching portion, will lock with the first locking portion and prevent the fastening portion and the attaching portion from coming out of the attached state; the fastening means is constituted by the first locking portion and the second locking portion; and the connecting member is fastened to the portal frame with the fastening portion and the attaching portion maintained in the attached state through locking of the second locking portion with the first locking portion.

According to this mode, when the fastening portions of the connecting members are attached to the attaching portions of the portal frames, the clamping members may be mounted to the attaching portions by a one-touch operation involving simply locking the second locking portion with the first locking portion; and fastening of the fastening portions of the connecting members to the attaching portions of the portal frames can be accomplished very quickly and easily. Ease of operation during assembly of the frame can be enhanced effectively thereby.

A seventh mode of the present invention provides a plastic sheet house frame structure according to the sixth mode wherein the second locking portion has an elastically deformable support post portion and a locking claw which is integrally projected from the distal end of the support post; when the fastening portion of the connecting member is attached to the attaching portion of the portal frame, the first locking portion pushes the claw portion of the second locking portion inducing elastic deformation of the support post portion; and when the first locking portion has surmounted the claw portion, the support post portion recovers, whereby the claw portion locks with the first locking portion.

According to this mode, the first locking portion and the second locking portion may be locked reliably through a relatively simple structure, and the fastening portions of the connecting members may thereby be easily and reliably fastened to the attaching portions of the portal frames.

An eighth mode of the present invention provides a plastic sheet house frame structure according to any of the first to seventh modes wherein at least either the fastening portion of the connecting member or the attaching portion of the portal frame is provided with a third mounting portion composed of a projection; the other is provided with a fourth mounting portion composed of a recessed or tubular portion into which the third mounting portion is force fit; the fastening means is constituted by the third mounting projection and the fourth mounting portion; and with the fastening portion in a state of attachment to the attaching portion the fastening portion of the connecting member is fastened to the attaching portion of the portal frame by force fitting the third mounting portion into the fourth mounting portion.

According to this mode, the fastening portions of the connecting members can be fastened to the attaching portions of the portal frames without the use of any independent components apart from the connecting members and the portal frames. The number of parts can be held to a minimum thereby, and the structure of the frame as whole can be simplified as a result. Moreover, the operation to fasten the fastening portions of the connecting members to the attaching portions of the portal frames can be carried out at the same time as the operation to attach the fastening portions to the attaching portions, whereby an efficient frame assembly operation may be accomplished more advantageously.

A ninth mode of the present invention provides a plastic sheet house frame structure according to any of the first to eighth modes wherein the attaching portion of the portal frame is provided with a recessed groove which extends in the direction in which the plurality of portal frames are spaced apart; and the connecting member is attached to the attaching portion by fitting the fastening portion of the connecting member into the recessed groove.

According to this mode, the fastening portion of the connecting member can be easily attached to the mounting portion of each portal frame. Moreover, with the fastening portion of the connecting member in a state of attachment to the attaching portion of the portal frame, the fastening portion will be advantageously prevented from projecting out to the side from the attaching portion of the portal frame, or the extent thereof may be minimized as much as possible. It is possible thereby to effectively avoid bulging in the attaching portion of the portal frame when the plastic sheeting is stretched over the frame from above, as well as avoiding areas of slack or areas of overlap in the plastic sheeting which could result.

A tenth mode of the present invention provides a plastic sheet house frame structure according to any of the first to ninth modes wherein the connecting members are composed of pipe members of circular cross section.

According to this mode, the connecting members may be constituted with a sufficiently simple structure. Moreover, commonly used plastic pipe or metal pipe may be advantageously employed as the connecting members.

An eleventh mode of the present invention provides a plastic sheet house frame structure according to any of the first to ninth modes wherein the connecting members are constituted to include two elongated flat plate portions which are spaced a prescribed distance apart and which extend parallel to one another; and two connecting plate portions which are situated between the opposed faces of the two flat plate portions and which are positioned orthogonally to the flat plate portions and extending in the lengthwise direction of the flat plate portions, thereby connecting the two flat plate portions to one another.

According to this mode, where for example the constitution pertaining to the second mode has been employed, by providing the two flat plate portions with a recessed portion or similar structure it will be possible in a recessed portion the two inside faces thereof which are situated in opposition in the lengthwise direction of the connecting member to easily form at the inside faces thereof two interlocking faces of larger interlocking area which, in conjunction with the two side faces of the attaching portion, will constitute positioning means. Moreover, where the constitution pertaining to the seventh mode or the eighth mode has been employed, either one of the two flat plate portions may be utilized advantageously as the first locking portion, without the need to add any special structure.

A twelfth mode of the present invention provides a plastic sheet house frame structure according to any of the first to eleventh modes wherein the portal frame has a divided structure which has been divided into multiple frame sections; and neighboring sections among these multiple frame sections are connected to one another by connecting means provided therebetween in order to constitute the portal frame.

According to this mode, even where the portal frames are quite large, they may nevertheless be made small and compact prior to assembly of the multiple frame sections. Thus, portal frames divided into multiple frame sections in this way will be easy to transport, and reduced storage space requirements will be advantageously afforded thereby.

A thirteenth mode of the present invention provides a plastic sheet house frame structure according to the twelfth mode wherein the portal frame has a pair of leg portions of prescribed length, and a connecting portion which connects the pair of leg portions together at a first lengthwise end thereof; the pair of leg portions and the connecting portion respectively have an elongated first frame section, with the first frame section of each leg portion and the first frame section of the connecting member positioned to either side of a second frame section which extends in a bow or curve; and neighboring sections among the first frame sections and the second frame sections are connected to one another by the connecting means.

According to this mode, the portal frames may be constituted by a simple structure simply by using first and second frame sections of two mutually different types.

A fourteenth mode of the present invention provides a plastic sheet house frame structure according to the thirteenth mode wherein on at least a first end of the two lengthwise ends of the first frame section and on at least a first end of the two lengthwise ends of the second frame section there is formed an interlocking slot which extends in a direction perpendicular to the lengthwise direction; on at least the other end of the two lengthwise ends of the first frame section and on at least the other end of the two lengthwise ends of the second frame section there is formed an interlocking projection which is fittable within the interlocking slot; interlocking land portions are formed respectively on the inside face to the opening side of the interlocking slot and on the outside face on the distal end side of the interlocking projection; the connecting means is constituted by the interlocking slot and the interlocking projection which respectively have these interlocking land portions; and with the interlocking projection fitted within the interlocking slot, the interlocking land portions interlock with one another and prevent the interlocking projection from becoming dislodged from interlocking slot, thereby connecting the neighboring frame sections to one another.

According to this mode, the connecting means has a relatively simple structure, and the structure of the portal frame having divided structure may be simplified advantageously as well.

A fifteenth mode of the present invention provides a plastic sheet house frame structure according to the fourteenth mode wherein only the interlocking slot having the convex interlocking portion is formed at the respective first lengthwise end of the first frame section and of the second frame section; and only the interlocking projection having the convex interlocking portion is formed at the respective other lengthwise end of the first frame section and of the second frame section.

According to this mode, a first frame section and a second frame section furnished with connecting means of relatively simple structure can be constituted by a single type of part. Consequently, a simplified portal frame structure can be more effectively achieved.

A sixteenth mode of the present invention provides a plastic sheet house frame structure according to the fourteenth mode wherein the first frame sections are composed of slotted frame sections on whose two lengthwise ends are formed only the interlocking slots having the interlocking land portions, and projectioned frame sections on whose two lengthwise ends are formed only the interlocking projections having the interlocking land portions; whereas the second frame sections have formed respectively thereon on the two lengthwise ends thereof only the interlocking slot having the interlocking land portions or the interlocking projection having the interlocking land portions.

According to this mode, since the two lengthwise ends in the direction of extension of the first frame section and the second frame section are provided with either an interlocking slot or an interlocking projection only, it is possible to advantageously eliminate connection with incorrect orientation when connecting first frame sections with second frame sections, or when connecting together first frame sections.

A seventeenth mode of the present invention provides a plastic sheet house furnished with the frame having a frame structure according to any of the first through sixteenth modes, and having plastic sheeting spread over the frame from above.

According to this mode, there is constituted a plastic sheet house having a frame endowed with the outstanding features which are afforded by employing the configurations according to the first through eleventh modes.

As will be apparent from the preceding description, according the frame structure of the plastic sheet house in accordance with the present invention, a frame which is produced by connecting together a plurality of portal frames spaced apart by a fixed distance may be constructed more easily and efficiently. As a result, ease of operation during construction of the frame may be effectively enhanced.

The plastic sheet house according to the present invention advantageously affords improved ease of operation during assembly.

The foregoing and/or other objects features and advantages of the invention will become more apparent from the following description of a non-limiting example with reference to the accompanying drawings in which like reference numerals designate like elements and wherein:
FIG. 1 is a front elevational view of one embodiment of a plastic sheet house frame structure according to the present invention;
FIG. 2 is a side elevational view of the frame structure of FIG. 1;
FIG. 3 is a fragmental enlarged view of III-III cross section of FIG. 2;
FIG. 4 is a view as seen from the direction indicated by arrow of IV of FIG. 3;
FIG. 5 is a view corresponding to FIG. 3, showing another embodiment of a plastic sheet house frame structure according to the present invention;
FIG. 6 is a view corresponding to FIG. 3, showing yet another embodiment of a plastic sheet house frame structure according to the present invention;
FIG. 7 is a view as seen from the direction indicated by arrow of VII of FIG. 6;
FIG. 8 is a fragmentary enlarged view of a connecting member of FIG. 6;
FIG. 9 is a cross sectional view taken along line IX-IX of FIG. 8;
FIG. 10 is a view corresponding to FIG. 3, showing yet another embodiment of a plastic sheet house frame structure according to the present invention;
FIG. 11 is a view corresponding to FIG. 3, showing yet another embodiment of a plastic sheet house frame structure according to the present invention;
FIG. 12 is a view corresponding to FIG. 3, showing yet another embodiment of a plastic sheet house frame structure according to the present invention; and
FIG. 13 is a view corresponding to FIG. 3, showing yet another embodiment of a plastic sheet house frame structure according to the present invention.

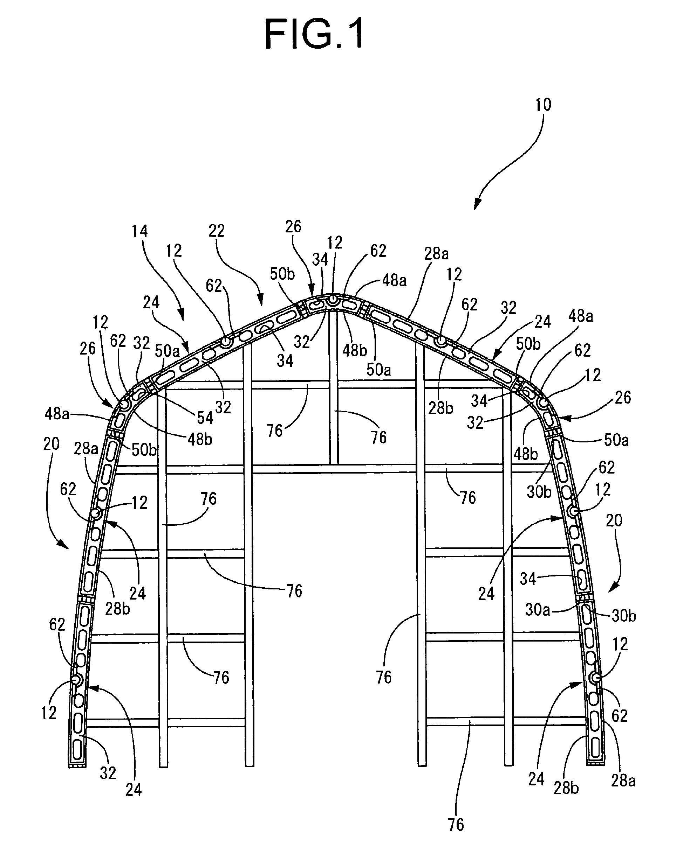

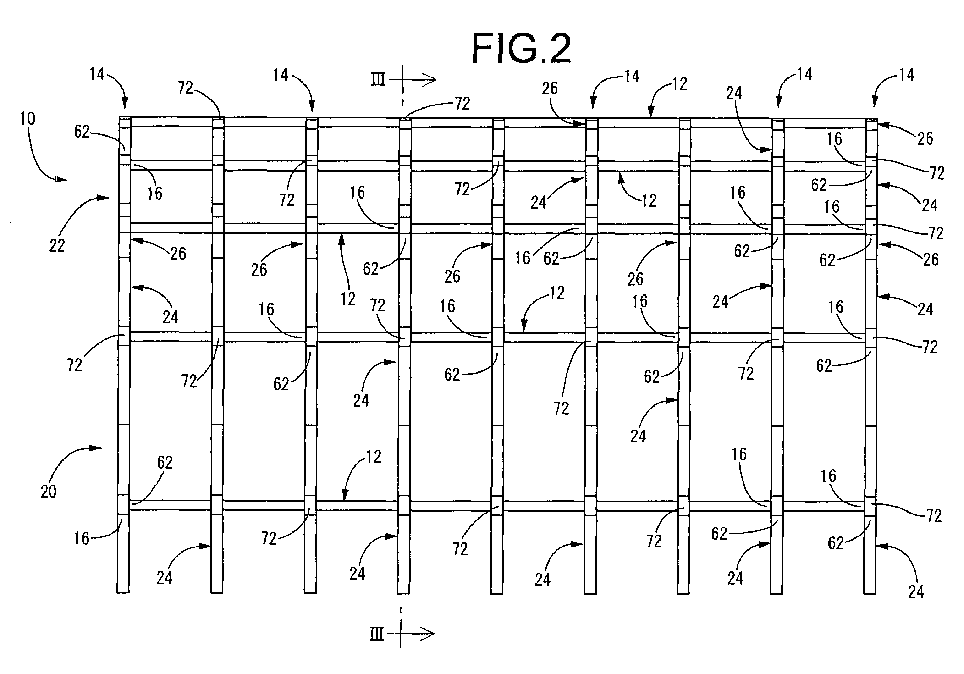

First, FIG. 1 is a front view of a frame 10 for a plastic greenhouse by way of a first embodiment of a frame having a plastic sheet house frame structure according to the present invention. FIG. 2 shows the frame 10 in side view. As will be apparent from the drawings, the frame 10 of the present embodiment is composed of nine connecting members 12 and nine portal frames 14 which are connected to one another by the nine connecting members 12.

More specifically, each of the nine connecting members 12 is composed of a round pipe serving as a pipe member which extends in a straight line with unchanging diameter in the axial direction and is fabricated of synthetic resin material such as vinyl chloride resin, ABS resin, or polypropylene, or of metal material such as aluminum or stainless steel, for example. The connecting members 12 composed of round pipes have length sufficient to span all nine of the portal frames 14 which have been positioned in a row at prescribed distance apart from one another, i.e. a length extending continuously from the portal frame 14 situated at a first end in the direction of lineup of the nine portal frames 14 to the portal frame 14 situated at the other end (e.g. length of about 6 m); and have relatively small diameter (e.g. diameter of about 38 mm) in comparison with their elongated length.

In the connecting member 12, sections at two locations situated at both lengthwise ends and at seven locations situated spaced apart from one another in the lengthwise medial portion, for a total of nine locations, serve as fastening portions 16 for respective fastening to the nine portal frames 14. Here, all nine of these fastening portions 16 are situated at fixed spacing from one another in the lengthwise direction of the connecting member 12.

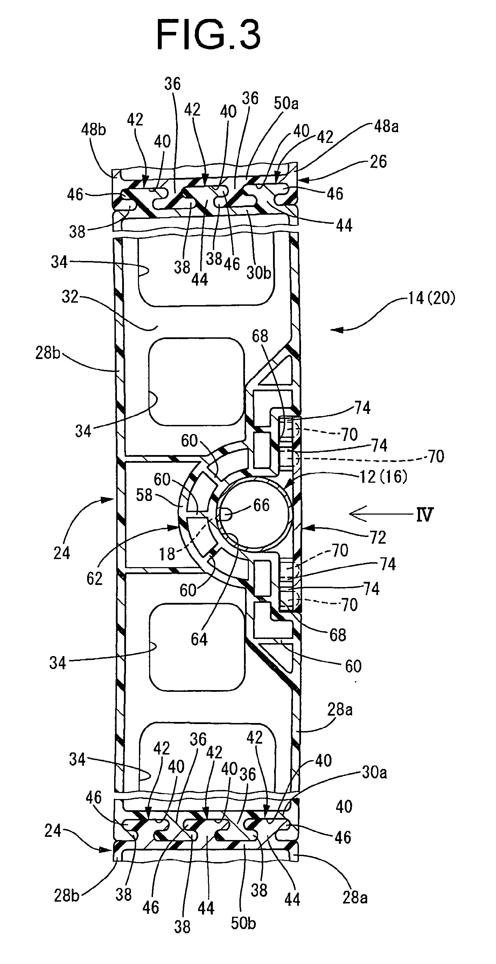

As shown in FIG. 3, each fastening portion 16 is provided with a circular positioning hole 18 respectively passing through it and serving as a second positioning portion (in FIG. 3, only one fastening portion 16 is shown). The positioning holes 18 are situated at the same locations in the circumferential direction as the connecting members 12 and are positioned spaced apart from each other at a fixed spacing which corresponds to that of the fastening portions 16 in the lengthwise direction of the connecting members 12.

As will be understood from FIG. 1, the portal frame 14 is composed overall of a pair of leg portions 20, 20 of arched contours having prescribed length and extending in the vertical direction; and a connecting portion 22 which extends in the generally horizontal direction and connects the leg portions 20, 20 together at their first lengthwise ends, i.e. their upper ends.

The pair of leg portions 20, 20 each have a divided structure divided into two first frame sections 24, 24; these two first frame sections 24, 24 positioned in-line in the vertical direction, are connected directly to one another. The connecting portion 22 has a divided structure divided into two first frame sections 24, 24 and three second frame sections 26, 26, 26; the two first frame sections 24, 24 are positioned in-line in the approximately horizontal direction and are connected to each other by one of the second frame sections 26; and one of [the remaining two] second frame sections 26 is connected to each of the two first frame sections 24, 24 at their respective end on the opposite side from the interconnected side. The first frame sections 24 situated to the upper side of the leg portions 20, 20 are then connected together with the second frame sections 26 which are respectively situated at either lengthwise end of the connecting portion 22.

Specifically, the portal frame 14 has a divided structure composed of a plurality (six in this case) of first frame sections 24 and a plurality (three in this case) of second frame sections 26, which are connected to one another.

The first frame sections 24 are composed of plastic moldings molded of synthetic resin such as vinyl chloride resin, ABS resin, or polypropylene. As will be apparent from FIGS. 1 through 3, the first frame section 24 is formed with elongated, generally rectangular rim contours overall, and has two elongated longitudinal plate portions 28a, 28b as well as two shorter transverse plate portions 30a, 30b. Each of the longitudinal plate portions 28a, 28b has an arcuate form bowed by a curvature radius of sufficiently small magnitude. To the inside of the rim-shaped first frame section 24 there is integrally provided a connector plate portion 32 which connects together the widthwise center portions of the opposing faces of the two longitudinal plate portions 28a, 28b, so as to extend along the entire length of the longitudinal plate portions 28a, 28b. This connector plate portion 32 is provided with a number of lightening portions 34 in order to reduce weight.

In the first frame section 24 a projecting rib 36 is integrally formed on the outside face of a first transverse plate portion 30a of the transverse plate portions 30a, 30b (i.e. on the face on the opposite side from the face in opposition to the other transverse plate portion 30b) at both ends in the width direction thereof (the sideways direction in FIG. 3) and at two locations eccentric by a prescribed distance towards the widthwise center portion from both ends, respectively. These four projecting ribs 36, 36, 36, 36 have contours which project a prescribed height from the outside face of the transverse plate portion 30a and extend continuously along the entire length of the transverse plate portion 30a in its lengthwise direction (the direction perpendicular to the plane of the paper in FIG. 3); and are positioned in opposition one another and spaced apart in the width direction of the transverse plate portion 30a. At the opposed faces of the distal ends of the two projecting ribs 36, 36 which are situated at either widthwise end of the transverse plate portion 30a there are integrally formed interlocking land portions 38 having a lateral cross section of generally semi-elliptical shape, which project in the direction of opposition to each other and which extend continuously along the entire length. Additionally, on either side face of the distal ends of the two remaining projecting ribs 36, 36 which are situated between the projecting ribs 36, 36 at either end there are integrally formed interlocking land portions 38 having a transverse cross section of generally semi-elliptical shape, which project sideways, i.e. in the direction of opposition to the neighboring projecting ribs 36 and which extend continuously along the entire length.

Through this design, three interlocking slots 40 each having two mutually adjacent facing projecting ribs 36, 36 as their side wall portions and extending continuously in the lengthwise direction of the transverse plate portion 30a are formed on the outside face of the transverse plate portion 30a of the first frame section 24. The interlocking land portions 38 are respectively projected from the inside face of the side wall portions of the these interlocking slots 40 on the opening side thereof (i.e. the projecting ribs 36), giving the interlocking slots 40 a transverse cross section of inverted "T" shape.

Furthermore, on the outside face of the other transverse plate portion 30b of the first frame section 24 (i.e. on the face on the opposite side from the face in opposition to the first transverse plate portion 30a) there are integrally formed three interlocking projections 42, 42, 42 which are spaced apart by a prescribed distance in the width direction of the transverse plate portion 30b and which face one another. These interlocking projections 42 are integrally provided with a projecting rib portion 44 which projects a prescribed height from the outside face of the transverse plate portion 30b and which extends continuously along the entire length thereof in the lengthwise direction; and with interlocking land portions 46, 46 having transverse cross section of generally semi-elliptical shape and which project to the sides from either side face of the distal end of the projecting rib portion 44, giving them a lateral cross section of "T" shape which corresponds to the lateral cross section shape of the interlocking slots 40.

Meanwhile, the second frame sections 26 are also composed of plastic moldings molded of resin material of the same type as the first frame sections 24; as shown in FIG. 1, they have two elongated longitudinal plate portions 48a, 48b of length shorter than the longitudinal plate portions 28a, 28b of the first frame sections 24, and two transverse plate portions 50a, 50a having length about equal to that of the two transverse plate portions 30a, 30b of the first frame sections 24. The two longitudinal plate portions 48a, 48b have arcuate or curving shape which bows or curves by a curvature radius greater than that of the longitudinal plate portions 28a, 28b of the first frame sections 24. The second frame sections 26 thereby have overall an elongated rectangular rim shape of short length which extends while bowing or curving by a relatively large curvature radius.

The second frame sections 26 have a basic structure identical to the structure of the first frame sections 24 shown in FIG. 3, except that they differ in overall length and curvature radius from the first frame sections 24. Specifically, while not shown in the drawings, the second frame sections 26 also have an integrally provided connector plate portion 32 which connects together the widthwise center portions of the opposing faces of the two longitudinal plate portions 48a, 48b so as to extend along the entire length of the longitudinal plate portions 48a, 48b. This connector plate portion 32 is also provided with a number of lightening portions 34 in order to reduce weight.

The outside face of a first transverse plate portion 50a of the two transverse plate portions 50a, 50b of the second frame section 26 has formed thereon three interlocking slots 40 with interlocking land portions 38; and the outside face of the other transverse plate portion 50b has formed thereon three interlocking projections 42 with interlocking land portions 46. The interlocking slots 40 with the interlocking land portions 38 and the interlocking projections 42 with the interlocking land portions 46 each have identical structure to the interlocking slots 40 with the interlocking land portions 38 and the interlocking projections 42 with the interlocking land portions 46 which have been provided respectively on the outside faces of the transverse plate portions 30a, 30b of the first frame sections 24.

Here, as shown in FIGS. 1 and 3, the three interlocking projections 42, 42, 42 which have been provided on the transverse plate portion 30b of one first frame section 24 are fitted into the interlocking slots 40, 40, 40 which have been provided on the transverse plate portion 30a of another first frame section 24; and in this fitted state, the interlocking land portions 38 of the interlocking slots 40 and the interlocking land portions 46 of the interlocking projections 42 are interlocked with one another. The interlocking projections 42are thereby prevented from coming apart from the interlocking slots 40 in the lengthwise direction of the first frame sections 24; and the two frame sections 24, 24 are connected together to form the leg portion 20 of the portal frame 14.

Two of the first frame sections 24 are positioned respectively to either side of one of the second frame sections 26; and two more second frame sections 26 are positioned one at a time to the sides of each of these two first frame sections 24 on the side thereof opposite from that next to [the aforementioned one] second frame section 26. Positioned in this way, the adjacent frame sections 24, 26 are then connected together by fitting the interlocking projections 42 with the interlocking land portions 46 into the interlocking slots 40 with the interlocking land portions 38, and interlocking the interlocking land portions 38, 46 with one another. The connecting portion 22 of the portal frame 14 is assembled in this way.

The second frame sections 26, 26 which have been positioned at the lengthwise ends of the connecting portion 22 in this way, and the first frame section 24 situated at a first lengthwise end (the upper end) of each of the pair of leg portions 20, 20 are then connected together by fitting the interlocking projections 42 with the interlocking land portions 46 into the interlocking slots 40 with the interlocking land portions 38, and interlocking the interlocking land portions 38, 46 with one another. The portal frame 14 composed of the pair of leg portions 20, 20 and the connecting portion 22 is assembled through a easy procedure in this way. As will be apparent from the above, in the present embodiment, the three interlocking slots 40 with the interlocking land portions 38 and the three interlocking projections 42 with the interlocking land portions 46 constitute connecting means.

In the first frame sections 24 and the second frame sections 26 which form the portal frame 14 there are integrally formed reinforcing plate portions 58, one of which is provided to each section in its lengthwise center portion.

Specifically, as shown in FIG. 3, the reinforcing plate portion 58 provided to the first frame section 24 is situated between the two longitudinal plate portions 28a, 28b in the lengthwise center section of the first frame section 24 and is positioned facing the vicinity of the longitudinal plate portion 28a which is situated to the outside face side of the portal frame 14 while extending along it for a shorter length than the longitudinal plate portion 28a. Additionally, a plurality of reinforcing ribs 60 of plate shape are positioned between the opposed faces of the longitudinal plate portion 28a and the reinforcing plate portion 58 so as to extend in the direction of their opposition, and are spaced apart in the lengthwise direction of the plate portions 28a, 58, thereby connecting together the longitudinal plate portion 28a and the reinforcing plate portion 58.

In the first frame section 24, the lengthwise center region of the section situated to the outside face side of the portal frame 14 is reinforced by the longitudinal plate portion 28a section and the reinforcing plate portion 58. The section which has been reinforced by the longitudinal plate portion 28a section and the reinforcing plate portion 58 constitutes an attaching portion 62.

The reinforcing plate portion 58 provided to the second frame section 26 has a structure similar to the reinforcing plate portion 58 which is provided to the first frame section 24. Moreover, a plurality of reinforcing ribs 60 of structure similar to those provided to the first frame section 24 are formed between the reinforcing plate portion 58 and the longitudinal plate portion 48a of the second frame section 26. The second frame section 26 is thereby also provided in the lengthwise center region of the section thereof situated to the outside face side of the portal frame 14 with a reinforced section which is composed of the longitudinal plate portion 48a section and the reinforcing plate portion 58; this reinforced section constitutes an attaching portion 62.

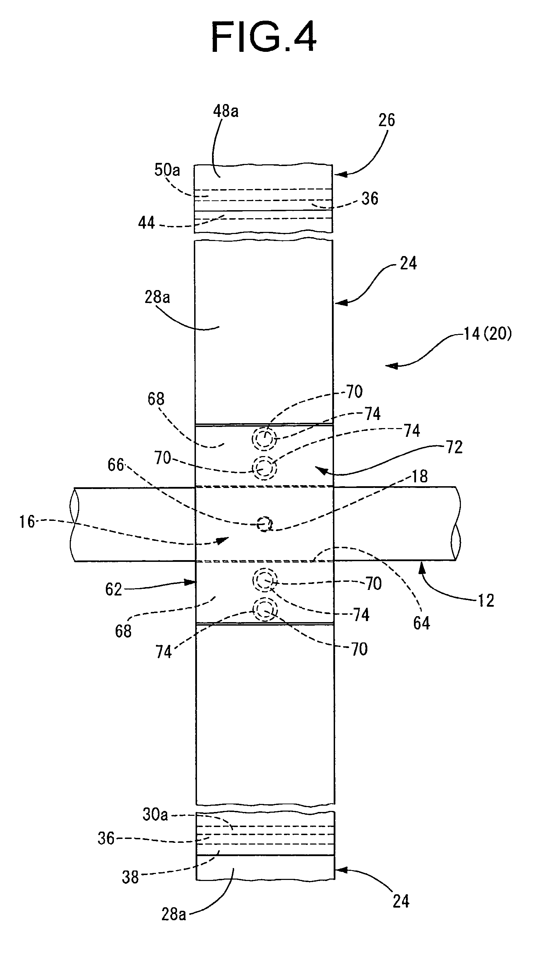

As shown in FIGS. 3 and 4, the respective attaching portions 62 of the first frame section 24 and the second frame section 26 are each provided with one recessed groove 64 of generally "U" shaped longitudinal cross section formed through indentation of both the longitudinal plate portion 28a or 48a and the reinforcing plate portion 58. This recessed groove 64 has a bottom inside face of circular half-tube contours composed of part of the outside face of the longitudinal plate portion 28a, 48a and extends continuously along the entire width of the attaching portion 62 (longitudinal plate portion 28a, 48a). The depth and width are each of a size greater by a prescribed dimension than the outside diameter dimension of the connecting members 12 made of circular pipe. Thus, the fastening portions 16 of the connecting members 12 may be fitted in and be accommodated entirely within the recessed groove 64.

Furthermore, a positioning projection 66 which serves as a first positioning portion is disposed integrally projecting from the center portion of the bottom inside wall of the recessed groove 64. This positioning projection 66 has an overall shape with circular post contours of size and height such that it is capable of being inserted into and passing through the positioning hole 18 which has been provided to each of the fastening portions 16; and has a semispherical face shape at its distal end.

In the attaching portions 62 of the first and second frame sections 24, 26, the sections situated to either side of the longitudinal plate portions 28a, 48a (the attaching portions 62) in the lengthwise direction with the recessed groove 64 therebetween are respectively one step lower than are the longitudinal plate portions 28a, 48a at their lengthwise ends, thereby forming step portions 68, 68 which extend in the lengthwise direction of the attaching portion 62. In these step portions 68, a plurality of mounting projections 70 serving as first mounting portions are integrally formed spaced apart at prescribed spacing in the lengthwise direction of the step portion 68. The mounting projections 70 also have overall shape with circular post contours and semispherical face shape at their distal end.

As shown in FIGS. 1 through 4, the nine fastening portions 16 of each connecting member 12 are respectively fitted into and accommodated within the recessed groove 64 of each attaching portion 62 of the first and second frame sections 24, 26, thereby attaching the connecting members 12 at their fastening portions 16 to the attaching portions 62 of each of the portal frames 14. In this attached state, the positioning projection 66 which has been provided to the inside bottom face of the recessed groove 64 of each attaching portion 62 will pass through the positioning hole 18 which has been provided to each fastening portion 16. The nine portal frames 14 are thereby positioned so that as to be spaced apart at a fixed spacing equal to the spacing between neighboring members of the nine fastening portions 16 provided to each of the connecting members 12. As will be apparent from the above, the positioning hole 16 of the fastening portion 16 of the connecting member 12, and the positioning projection 66 of the attaching portion 62 of the portal frame 14 here constitute positioning means.

Furthermore, in the present embodiment, with the fastening portions 16 of the connecting members 12 in the attached state to the attaching portions 62 of each of the portal frames 14, one clamping member 72 is positioned in each attaching portion 62 so as to straddle the two step portions 68, 68 to either side of the recessed groove 64. As will be apparent from FIGS. 3 through 6, this clamping member 72 is a resin molding of generally thin, elongated rectangular flat shape having length dimension greater than the width dimension of the recessed groove 64 of the attaching portion 62, and having a thickness dimension slightly smaller than the height dimension of the step of the step portions 68 of the attaching portion 62. Of the clamping members 72, those intended for placement in the attaching portion 62 of the first frame sections 24 are bowed with a curvature radius the same as that of the longitudinal plate portion 28a of the first frame sections 24, while those intended for placement in the attaching portion 62 of the second frame sections 26 are bowed with a curvature radius the same as that of the longitudinal plate portion 48a of the second frame sections 26.

Furthermore, the clamping member 72 is provided with mounting tube portions 74 of round tubular shape as second mounting portions, which are integrally formed in sections thereof at either lengthwise end on one face lying in the thickness direction, in other words, on faces thereof which face towards and are juxtaposed against the two step portions 68, 68. These mounting tube portions 74 are provided in corresponding number at locations which correspond to the mounting projections 70 which have been provided to each step portion 68, and have openings which permit force fitting of the mounting projections 70.

With the fastening portions 16 of each connecting member 12 attached to the attaching portions 62 of each portal frame 14, this clamping member 72 will be positioned straddling the two step portions 68, 68 of each attaching portion 62 thereby clamping the fastening portion 16 of each connecting member 12 between itself and the inside bottom face of the recessed groove 64 of the attaching portion 62. In this clamped state the mounting projections 70 which have been provided to each step portion 68 are force fit respectively into the opening of each of the mounting tube portions 74 whereby the clamping member 72 is mounted onto the attaching portion 62. Moreover, by so doing the fastening portions of each of the connecting members 12 will be fastened by the clamping member 72 in a positioned and attached state with respect to the attaching portions 62 of each of the portal frames 14. From the above it will be apparent that in the present embodiment, fastening means are constituted by the recessed groove 64 and the mounting projections 70 of attaching portion 62 of the portal frame 14, the clamping member 72, and the mounting tube portions 74.

At this point, by the nine connecting members 12 the nine portal frames 14 will be connected to one another in a state of being positioned in a row spaced apart at fixed spacing equal to the spacing of the fastening portions 16. As shown in FIG. 1, of the nine portal frames 14, those to which the fastening portions 16 situated at the lengthwise ends of each connecting member 12 are fastened will respectively have a plurality of girder members 76 composed of long, thin tubular pipe attached in a combination of longitudinal and transverse orientations (only a frame to which are fastened the fastening portions 16 situated at a first lengthwise end of each connecting member 12 is shown in FIG. 1), thereby forming the frame 10. Vinyl sheeting serving as a plastic sheet (not shown) is then stretched over the frame 10 from above to produce a plastic greenhouse.

Accordingly, during construction and assembly of the frame 10 in the present embodiment, by performing a simple operation of passing the positioning projections 66 of the attaching portions 62 which are positioned at respectively identical height on each of the nine portal frames 14 into the positioning holes 18 of the nine fastening portions 16 which have been provided respectively to the nine elongated connecting members 12, while at the same time attaching each of the fastening portions 16 to the attaching portions 62, it will be possible for the nine portal frames 14 to be simply and reliably positioned so that they are arranged in a row at fixed spacing apart from one another, without the need for a laborious positioning procedure such as individually measuring the spaces between neighboring portal frames 14. Then, with the connecting members 12 in a state of attachment to the portal frames 14, through a one-touch operation of simply installing a clamping member 72 in each of the attaching portions 62 and force fitting the mounting projections 70 of the attaching portions 62 into the openings in the mounting tube portions 74 of the clamping member 72, it will be possible for the connecting members 12 to be quickly and easily fastened to the portal frames 14.

Consequently, with the frame 10 pertaining to the present embodiment, it is possible for the operation of connecting together the nine portal frames 14 with the nine connecting members 12 with the frames positioned spaced apart by a fixed distance to be carried out with enhanced effectiveness.

Moreover, in the present embodiment the connecting members 12 have length which spans all nine of the portal frames 14 which have been positioned spaced apart from one another; thus during construction of the frame it will be possible to advantageously avoid a laborious procedure for positioning the connecting members one at a time between neighboring portal frames, in contrast to conventional designs in which the connecting members are equal in length to the spacing between neighboring portal frames, for example.

Furthermore, in the frame 10 of the present embodiment the fastening portions 16 of the connecting members 12 are fitted into and accommodated within the recessed grooves 64 which have been provided to the attaching portions 62 of the portal frames 14, attaching the fastening portions 16 to the attaching portions 62. In particular, here the depth of the recessed grooves 64 is of greater dimension than the outside dimension of the connecting members 16 consisting of tubular pipe. Therefore, with the fastening portions 16 attached to the attaching portions 62, the fastening portions 16 will fit into and be accommodated entirely within the recessed grooves 64 of the attaching portions 62 thus advantageously preventing the fastening portions 16 from projecting out to the side from the attaching portions 62. Thus, when vinyl sheeting has been stretched over the frame 10 from above it will be possible to effectively avoid outward bulging of the vinyl sheeting at the attaching portions 62 of the portal frames 14, and to thereby avoid slack or overlap in the vinyl sheeting.

A further advantage of the present embodiment is that since the connecting members 12 are of simple shape composed of tubular pipe, not only can the connecting members 12 be easily fabricated, but the attaching portions 62 of the portal frames 14 for attachment of the connecting members 12 may have a simple structure as well.

Moreover, in the present embodiment, the portal frame 14 has a divided structure composed of a plurality of first frame sections 24 and a plurality of second frame sections 26. For this reason, despite the large overall size of the portal frames 14, by dividing them into the smaller first frame sections 24 and second frame sections 26 the portal frames will be easy to transport, and reduced storage space requirements will be advantageously afforded thereby.

Furthermore, with the frame 10 of the present embodiment, interlocking slots 40 with interlocking land portions 38 are provided to the first frame sections 24 and the second frame sections 26 respectively at a first lengthwise end thereof; and interlocking projections 42 with interlocking land portions 46 are provided at the other end thereof. That is, the first frame sections 24 and the second frame sections 26 are respectively constituted by a single type of part. Thus, despite the portal frames 14 having a divided structure, they can be composed of the minimum possible number of part types, and thus the structure of the portal frame 14, and hence of the frame 10, can be simplified.

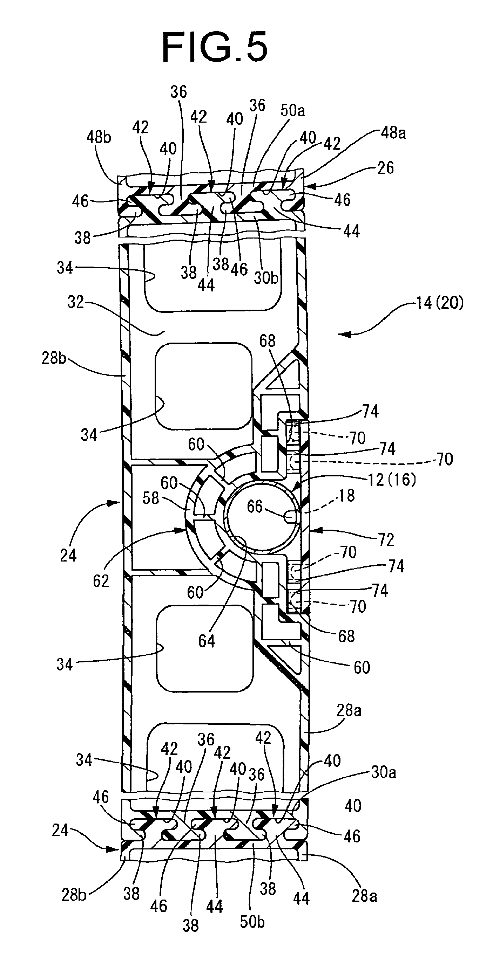

In the first embodiment discussed above, the positioning projection 66 is disposed on the bottom inside face of the recessed groove 64 in the attaching portion 62 of the portal frame 14; however, it would be possible for the positioning projection 66 to instead be disposed in the clamping section of the clamping member 72 which clamps the fastening portion 16 of the connecting member 12 to the bottom inside face of the recessed groove 64 as shown in FIG. 5 for example. By so doing, further simplification of the structure of the attaching portion 62, and hence of the portal frame 14, may be advantageously achieved. That is, here, a third positioning portion is constituted by the positioning projection 66 disposed on the clamping member 72, while a fourth positioning portion is constituted by the positioning hole 18 provided to the fastening portion 16 of the connecting member 12, and positioning means are constituted by the positioning projection 66 and the positioning hole 18.

While not illustrated in the drawings, where it is possible to do so, the positioning projection 66 may be provided on the fastening portion 16 of the connecting member 12 in place of or in addition to the positioning hole 18, while the positioning hole 18 may be provided on the attaching portion 62 of the portal frame 14 or on the clamping member 72 in place of or in addition to the positioning projection 66. Furthermore, the positioning hole 18 need not necessarily be a through-hole, and bottomed well or recess would also be acceptable.

As shown in FIG. 5, the mounting tube portions 74 may be disposed on the two step portions 68, 68 of the attaching portion 62 of the portal frame 14, while the mounting projections 70 may be provided to the clamping member 72.

Furthermore, while not illustrated in the drawings, mounting tube portions 74 and mounting projections 70 may both be disposed on the two step portions 68, 68, while mounting projections 70 and mounting projections 70 may both be disposed on the clamping member 72 as well. Recessed portions into which the mounting projections 70 are force fittable may be provided to the attaching portion 62 of the portal frame 14 or the clamping member 72 in place of in addition to the mounting tube portions 74, with these recessed portions constituting the second mounting portions.

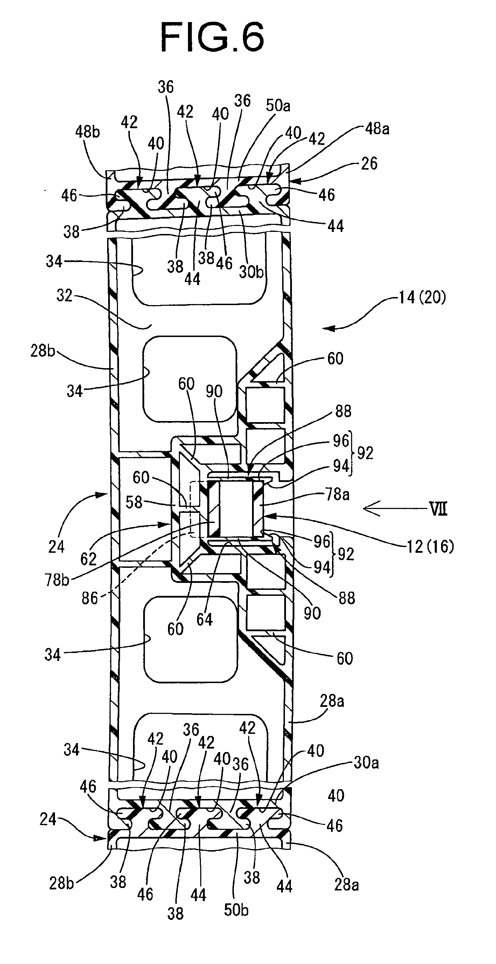

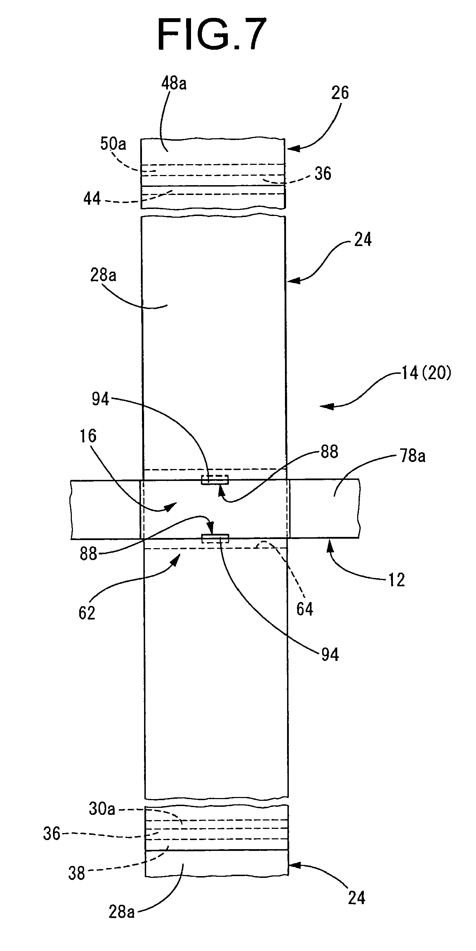

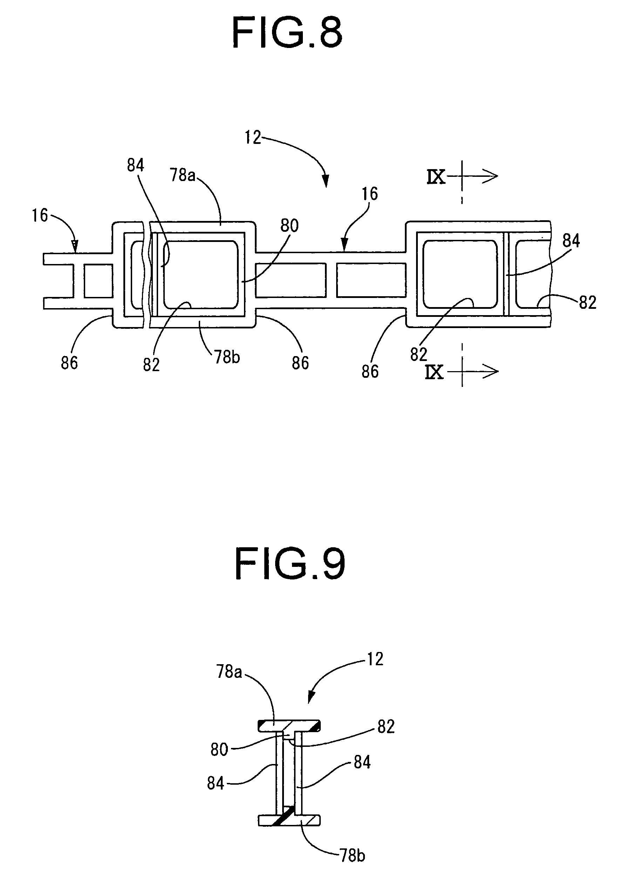

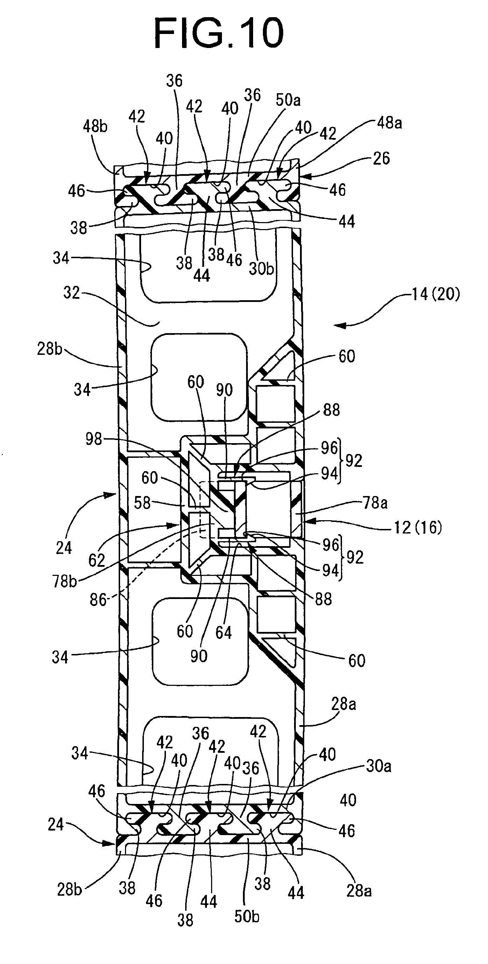

Next, FIGS. 6 and 7 depict, in fragmentary enlarged cross section and in fragmentary side view respectively, another embodiment in which the respective structures of the connecting member 12 and the portal frame 14 differ from that in the preceding embodiment. For the embodiments shown in FIGS. 6 and 7, as well as in FIGS. 8 and 9 to be discussed later and in the several further additional embodiments illustrated in FIGS. 10 to 13 which differ from both this embodiment and the preceding embodiment, regions and components which are similar in structure to those in the preceding embodiment will be assigned the same symbols as in FIGS. 1 through 5 and will not be discussed in any detail.

Specifically, as will be apparent from FIGS. 6 and 7, as well as from FIGS. 8 and 9 which depict the principal parts of the connecting member 12 in side view and longitudinal sectional view, in the present embodiment the connecting member 12 is constituted to include two flat plate portions 78a, 78b of thin elongated rectangular shape; and connector plate portions 80 positioned between the opposing faces of these two flat plate portions 78a, 78b so as to be orthogonal to these flat plate portions 78, and extending in the lengthwise direction of the flat plate portions 78 to connect the two flat plate portions 78a, 78b to one another. Here, the connecting member 12 has a cross section resembling an I-beam. The connector plate portions 80 of the connecting member 12 have a number of lightening portions 82 situated at fixing spacing in the lengthwise direction of the connector plate portion 80 in order to reduce weight; and reinforcing ribs 84 are provided projecting respectively from either side in the thickness direction of sections of the connector plate portion 80 situated between neighboring lightening portions 82.

The connecting member 12 extends for a length sufficient to span all nine of the portal frames 14 which have been positioned in a row at prescribed distance apart from one another, and is constituted entirely of an integral molding of synthetic resin material such as vinyl chloride resin, ABS resin, or polypropylene.

As will be apparent from FIG. 8, sections in the connecting member 12 at two locations situated at both lengthwise ends and at seven locations situated spaced apart from one another in the lengthwise medial portion, for a total of nine locations, are constricted in width and constitute fastening portions 16 for respective fastening to the nine portal frames 14 (in FIG. 8, only a fastening portion 16 situated at one lengthwise end and a fastening portion 16 situated at one location in the lengthwise medial portion are shown). While not illustrated in the drawings, these nine fastening portions 16 are situated spaced apart from one another at fixed spacing in the lengthwise direction of the connecting member 12 in the same way as in the preceding embodiment.

Specifically, in the present embodiment, the two lengthwise ends of the two flat plate portions 78a, 78b of the connecting member 12 are respectively stepped inward in the direction of opposition thereof, whereby the two lengthwise ends of the connecting member 12 respectively constitute fastening portions 16 which are constricted in width relative to the medial portion. In the fastening portions 16 at the two ends of the connecting member 12, the stepped faces of one flat plate portion 78b in particular will respectively constitute flat interlocking faces 86 which extend in the perpendicular direction to the lengthwise direction of the connecting member 12.

In the sections at the seven locations situated at fixed spacing apart from one another in the lengthwise medial portions of the two flat plate portions 78a, 78b of the connecting member 12, there are provided recesses produced by bending of the sections into a three-sided box shape. Fastening portions 16 which have been constricted in width relative to the other portions are constituted thereby in the sections at the seven locations in the medial portion of the connecting member 12. In these seven fastening portions 16, the two side faces of the recesses which have been provided on one flat plate portion 78b (the two side faces facing one another in the lengthwise direction of the connecting member 12) constitute flat interlocking faces 86 which extend in the perpendicular direction to the lengthwise direction of the connecting member 12. Furthermore, the spacing between the two interlocking faces 86, 86 provided to any one of these fastening portions 16 is of a dimension slightly larger than the width dimension of the respective longitudinal plate portions 28a, 48a of the first and second frame sections 24, 26 of the portal frames 14.

Meanwhile, as shown in FIGS. 6 and 7, the attaching portions 62 provided in the respective lengthwise medial portions of the plurality of first frame sections 22 and the plurality of second frame sections 24 which make up the portal frame 14 are each furnished with one recessed groove 64 of rectangular shape in longitudinal cross section which is formed by indenting both the longitudinal plate portion 28a or 48a and the reinforcing plate portion 58 (in FIGS. 6 and 7, only a first frame section 24 is shown; as in the preceding embodiment, the second frame sections 26 have basic structure similar to the first frame sections 24 and have therefore been omitted from the drawings). This recessed groove 64 has a rectangular cross sectional shape composed of the lengthwise center section of the outside face of the longitudinal plate portion 28a or 48a and extends continuously across the entire width of the attaching portion 62 (the longitudinal plate portion 28a or 48a). Its depth is of a size larger by a prescribed dimension than the thickness of the connecting member 12 (the total dimension of the respective thicknesses of the two flat plate portions 78a, 78b and the gap between their opposing faces), while its width is of a size larger by a prescribed dimension than the width of the connecting member 12 (the respective widths of the two flat plate portions 78a, 78b). Thus, the fastening portion 16 of the connecting member 12 can be fitted and accommodated entirely within the recessed groove 64.

One locking portion 88 is integrally formed in each of regions at either end of the bottom inside face of the recessed groove 64 in the width direction (the lengthwise direction of the attaching portion 62). Each of these two locking portions 88, 88 has a flat plate shape and is integrally provided with a support post portion 90 which extends in a straight line from the bottom inside face towards the opening side of the recessed groove 64, and with a locking claw 92 which projects from the distal end section of the face of the support post portion 90 on one side thereof in the thickness direction. The support post portion 90 is flexibly deformable or elastically deformable in the thickness direction on the basis of plastic spring characteristics. The locking claw 92 has a sloping guide face 94 which slopes down from the distal edge of the support post portion 90, and a flat interlock face 96 which extends parallel to the bottom inside face of the recessed groove 64.

The two locking portions 88, 88 integrally project upright at regions at either widthwise end of the bottom inside face of the recessed groove 64, positioned parallel with the faces on the sides on which the locking claw 92 has been formed facing one another. The distance between the support post portions 90 will be slightly greater than the width dimension of the connecting member 12.

In the present embodiment, the fastening portions 16 of each connecting member 12 are respectively fit into and are accommodated entirely within the recessed groove 64 of the attaching portions 62 of the first and second frame sections 24, 26 in the nine portal frames 14, whereby the connecting members 12 are attached to the attaching portions 62 of each portal frame 14 at the fastening portions 16.

With the fastening portions 16 attached to the attaching portions 62 in this way, the interlocking faces 86 which have been provided respectively to the two fastening portions 16, 16 which are situated at either lengthwise end of each connecting member 12 will be mated with the opposing faces of the attaching portions 62 of the two portal frames 14 which, of the nine portal frames 14, are situated at the ends. Furthermore, the interlocking faces 86 of the fastening portions 16 situated respectively at seven locations in the lengthwise medial section of the connecting member 12 will be mated individually with the side faces at either widthwise side of the respective attaching portions 62 in the remaining seven portal frames 14. By so doing the nine portal frames 14 will be positioned so as to be situated spaced apart be fixed spacing equal to the spacing between neighboring fastening portions 16 among the nine ones provided to each connecting member 12. From the above it will be appreciated that, here, the interlocking faces 86 of the fastening portions 16 of the connecting members 12 and the widthwise side faces of the attaching portions 62 of the portal frames 14 constitute positioning means.

Furthermore, in the present embodiment, during attachment of the fastening portions 12 of the connecting members 12 to the attaching portions 62 of the portal frames 14, the two widthwise ends of the two flat plate portions 78a, 78b of the fastening portion 16 will be guided by the sloping guide faces 94 of the locking claws 92 of the two locking portions 88, 88 which have been provided within the recessed groove 64, and will respectively push against the interlocking claws 92 thereby inducing elastic deformation of the support post portions 90 of the locking portions 88, 88 while the fastening portion 16 is being fitted into the recessed groove 64 of the attaching portion 62. Then, once both of the two flat plate portions 78a, 78b have surmounted the locking claws 92, the support post portions 90 will recover from the state of elastic deformation and the flat plate portion 78a of the fastening portion 16 situated towards the opening side of the recessed groove 64 will become locked against the flat interlock faces 96 of the interlocking claws 92 of the locking portions 88. The fastening portion 16 will thereby be prevented from becoming dislodged from inside the recessed groove 64, that is, from becoming detached from the attaching portion 62, so that the fastening portion 16 is fastened to the attaching portion 62. From the above it will be appreciated that in the present embodiment, the flat plate portion 78a of the fastening portion 16 constitutes a first locking portion; the locking portion 88 constitutes a second locking portion; and the flat plate portion 78a and the locking portion 88 together constitute fastening means.

In the present embodiment as in the preceding embodiment discussed earlier, the nine portal frames 14 are connected together while positioned in a row spaced apart by fixed spacing equal to the placement spacing of the fastening portions 16, thereby forming the frame 10. Then, a plastic greenhouse is produced by stretching vinyl sheeting (not shown) over the frame 10 from above.

During construction and assembly of the frame 10 in the present embodiment, by performing a simple operation of merely fitting the nine fastening portions 16 which have been provided respectively to the nine elongated connecting members 12 into the recessed grooves 64 of the attaching portions 62 which are positioned at respectively identical height on each of the nine portal frames 14 and interlocking the interlocking faces 86 of the fastening portions with the widthwise side faces of the attaching portions 62, while at the same time attaching the fastening portions 16 to the attaching portions 62, it will be possible for the nine portal frames 14 to be simply and reliably positioned so that they are arranged in a row at fixed spacing apart from one another, without the need for a laborious positioning procedure such as individually measuring the spaces between neighboring portal frames 14. Then, during attachment of the connecting members 12 to the portal frames 14, through a very simple operation of pushing the flat plate portion 78a of the fastening portion 16 situated towards the opening side of the recessed groove 64 into the recessed groove 64 until the fastening portion 16 interlocks with the locking portions 88 within the recessed groove 64, it will be possible for the connecting members 12 to be quickly and easily fastened to the portal frames 14.

With the frame 10 pertaining to the present embodiment, like that of the preceding embodiment, ease of operation during construction by connecting the nine portal frames 14 positioned spaced apart by a fixed distance together with the nine connecting members 12 can be enhanced effectively thereby.

Moreover, in the present embodiment, the flat plate portions 78a of the fastening portions 16 of the connecting member 12 are locked by locking portions 88 which have been integrally formed within the recessed grooves 64 of the attaching portions 62 of the portal frame 14, thereby fastening the fastening portions 16 to the attaching portions 62. Accordingly there is no need for any special, independent components apart from the fastening portion 16 and the attaching portion 62 in order to fasten them together, and thus the number of parts can be kept to the minimum possible. As a result, the structure of the frame 10 can be simplified effectively, and reduced parts costs can be advantageously achieved as well.

In the present embodiment, interlocking faces 86 of constricted width which have been formed in the fastening portions 16 of the connecting members 12 interlock with both widthwise side faces of the attaching portions 62 of the portal frames 14, thereby effecting positioning of the plurality of portal frames 14 when the connecting members 12 are attached and fastened to the portal frames 14. For this reason there is no need to provide the portal frames 14 with any special parts or regions for the purpose of positioning them, and thus the structure of the portal frames 14, and hence of the frame 10, can be simplified advantageously.

In the preceding embodiment, of the two flat plate portions 78a, 78b of the connecting member 12, the flat plate portion 78a which is situated towards the opening side of the recessed groove 64 when the fastening portion 16 has been fitted into the recessed groove 64 will interlock with the interlocking claws 92 of the locking portions 88 which have been provided inside the recessed groove 64 of each attaching portion 62 of the portal framed 14; however, in another possible design, of these two flat plate portions 78a, 78b, the flat plate portion 78b which is situated towards the bottom face side of the recessed groove 64 may interlock with the interlocking claws 92 of the locking portions 88.

As shown in FIG. 10 for example, a projection 98 of prescribed height is disposed in the center portion of the bottom inside face of the recessed groove 64, and to either side thereof is provided one interlocking claw 92 which is positioned at a location higher by a prescribed dimension than the projection 98. The fastening portion 16 of the connecting member 12 is then fitted into the recessed groove 64 until, of the two flat plate portions 78a, 78b, a first flat plate portion 78b reaches a location in contact with the projection 98 on the bottom of the recessed groove 64, and the first flat plate portion 78b thereby interlocks with the interlocking claw 92 of each locking portion 88.

In this case, when the fastening portions 16 of the connecting member 12 are fastened to the attaching portions 62 of the portal frame 14, only one of the two flat plate portions 78a, 78b of the connecting member 12 will surmount the interlocking claws 92 of the locking portions 88 and interlock with them. For this reason, as compared with a structure whereby, for example, both of the two flat plate portions 78a, 78b must surmount the interlocking claws 92 of the locking portions 88 in order to accomplish interlock of the flat plate portions 78 with the interlocking claws 92 of the locking portions 88, it will be possible to more advantageously prevent possible breakage or damage of the support post portion 90 of the locking portion 88 when the flat plate portions 78 surmount the interlocking claw 92 of the locking portion 88.

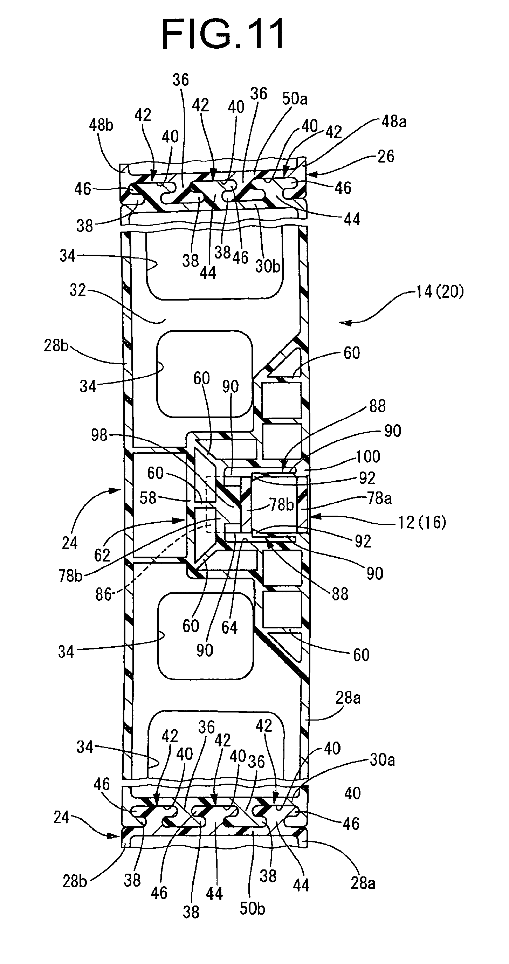

Moreover, the locations for forming the locking portions 88 are not limited to those taught by way of example above. As shown in FIG. 11 for example, it would be possible to provide inside projections 100 disposed respectively in mutually facing sections of the inside faces of sides of the recessed groove 64; and to integrally form on each of these inside projections 100 a support post portion 90 which extends in the depth direction of the recessed groove 64, and an interlocking claw 92 provided at the distal end which is the lower end thereof.

While not shown in the drawing, locking portions 88 may be formed on the fastening portions 16 of the connecting members 12, in place of or in addition to providing the attaching portions 62 of the portal frames 14 with locking portions 88. In this case, the attaching portions 62 of the portal frames 14 would be provided with locking portions which interlock with the locking portions 88 and prevent the fastening portions 16 from becoming detached from the attaching portions 62, thereby fastening the fastening portions 16 to the attaching portions 62.

It would also be possible to omit the locking portions 88 provided in the recessed groove 64 of the attaching portions 62 of the portal frames 14, and to instead provide the fastening means provided to the first embodiment, in place of the fastening means composed of the locking portions 88 and the flat plate portions 78 of the fastening portions 16 of the connecting members 12.

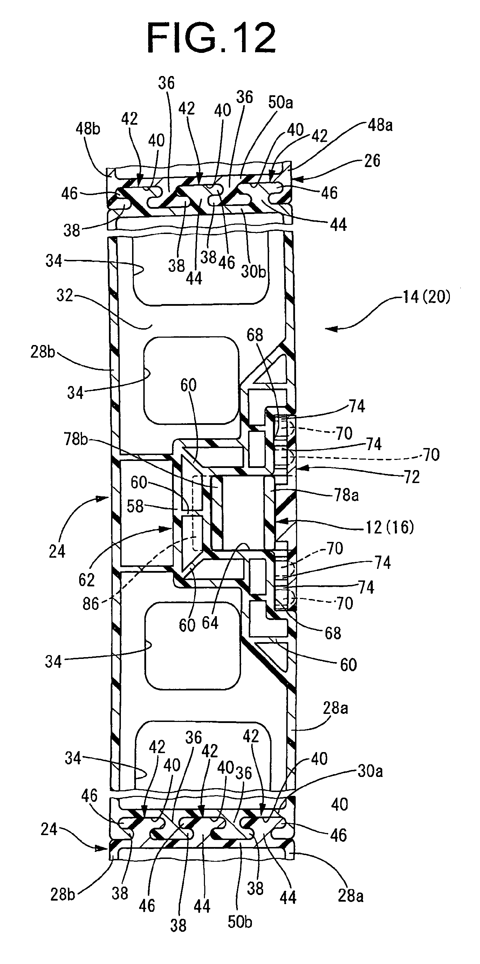

Specifically, as shown in FIG. 12 for example, mounting projections 70 could be provided respectively to two step portions 68, 68 which are situated at the lengthwise ends to either side of the recessed groove 64 in the attaching portion 68. Then, with the fastening portion 16 of the connecting member 12 fitting within the recessed groove 64, a clamping member 72 will be positioned on the fastening portion 16 so that the fastening portion 16 is clamped between it and the bottom inside face of the recessed groove 64; and the mounting projections 70 will be force fit into the holes inside the mounting tube portions 74 of the clamping member 72. The fastening portion 16 of the connecting member 12 will be fastened to the attaching portion 62 of the portal frame 14 thereby.

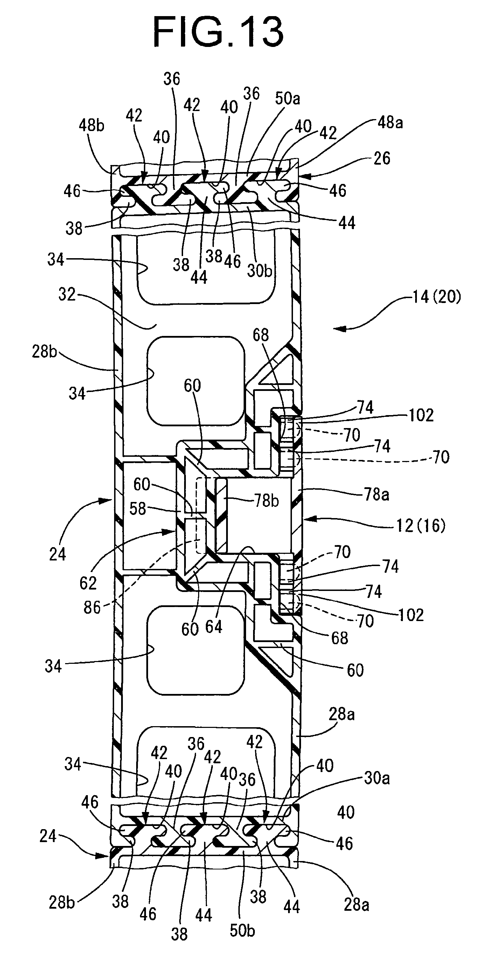

Alternatively, as shown in FIG. 13, of the two flat plate portions 78a, 78b in the fastening portion 16 of the connecting member 12, a first flat plate portion 78a may be integrally provided with flange portions 102, 102 which extend outward towards either side in the width direction; and mounting projections 70 serving as third mounting portions may be provided in these flange portions 102, 102 on the face thereof lying towards the other flat plate portion 78b. Then, when attaching the fastening portion 16 to the attaching portion 62 of the portal frame 14, the mounting projections 70 of each of the flange portions 102, 102 will be force fit into the holes inside mounting tube portions 74 which have been provided to the attaching portion 62 by way of fourth mounting portions. It will be possible thereby to fasten the fastening portion 16 of the connecting member 12 to the attaching portion 62 of the portal frame 14. With such a structure it will be possible to omit the clamping member 72, and to advantageously achieve simpler structure and reduced cost through a reduction in the number of parts.

Of course, where fastening means composed of mounting tube portions 74 and mounting projections 70 as described above are employed, as discussed earlier in detail the clamping member 72 could be provided with recessed portions in which the mounting projections 70 are force fittable in place of or in addition to the mounting tube portions 74; or the locations where the mounting tube portions 74 or recessed portions and the mounting projections 70 are situated could be modified in various ways.

Furthermore, in the embodiments described above, the portal frame 14 has a divided structure composed of a plurality of first frame sections 24 and a plurality of second frame sections 26; however, the portal frame 14 could be composed of a single component.

Even where the portal frame 14 has a divided structure composed of a plurality of frame sections, the specific structure of the frame sections is not limited in any way to those shown by way of example herein.

Specifically, in contrast to the illustrated first frame section 24, several of the plurality of first frame sections 24 may consist of slotted first frame sections 24 provided respectively at each lengthwise end with only an interlocking slot 40 having interlocking land portions 38 while the remaining sections consist of projectioned first frame sections 24 provided respectively at each lengthwise end with only an interlocking projection 42 having interlocking land portions 46; and in contrast to the illustrated second frame section 26, all of the second frame sections 26 may be provided at either lengthwise end with only an interlocking slot 40 having interlocking land portions 38 or an interlocking projection 42 having interlocking land portions 46.

With such an arrangement, in contrast the case where, for example, the first frame sections 24 and the second frame sections 26 are respectively provided at a first end thereof with an interlocking slot 40 having interlocking land portions 38, and at the other end thereof with an interlocking projection 42 having interlocking land portions 46, it is possible to avoid before the fact a situation in which, for example, first frame sections 24 are connected together and first frame sections 24 are connected to second frame sections 26 to separately construct one part of a portal frame 14 and another part excluding this one part, and when these two sections are to be ultimately connected together to form the portal frame 14, it proves impossible to connect the two sections together. As a result, ease of operation during the construction or assembly operation of the frame 10 may be effectively enhanced.

Where it is possible to do so, the first frame sections 24 and the second frame sections 26 may be respectively provided at both their lengthwise ends with both an interlocking slot 40 having interlocking land portions 38 and an interlocking projection 42 having interlocking land portions 46.

The structures of the positioning means for carrying out positioning of the plurality of portal frames 14 and the fastening means for fastening the fastening portions 16 of the connecting members 12 to the attaching portions 62 of the portal frames 14 which are essential elements of the present invention, as well as the structure of the connecting means for connecting together the frame sections 24, 26 when the portal frames 14 have a divided structure composed of a plurality of frame sections 24, 26, are of course in no way limited to the several kinds shown hereinabove by way of example.

Furthermore, the overall shape, material, size, number and so on of the connecting members 12 and the portal frames 14 may be modified appropriately.

While the presently preferred embodiment of the invention has been described above in detail for illustrative purpose only, it is to be understood that the invention is not limited to the details of the illustrated embodiment. It is also to be understood that the present invention may be embodied with various other changes, modifications and improvements, which may occur to those skilled in the art, without departing from the spirit and scope of the invention.

## Claims

1. A plastic sheet house frame structure (10) comprising:
a plurality of portal frames (14) positioned in a row at a prescribed distance apart from one another and erected upright on the ground;
a plurality of connecting members (12) composed of rigid, elongated members which span all of the plurality of portal frames (14) in the direction in which the plurality of portal frames (14) are spaced apart and which have fastening portions (16) at a plurality of locations spaced apart by fixed spacing in the lengthwise direction thereof;
positioning means (18, 66; 62, 86) which, with the connecting members (12) in a state of attachment at the fastening portions (16) thereof to attaching portions (62) which are provided respectively to the plurality of portal frames (14), position the plurality of portal frames (14) so that the plurality of portal frames (14) are positioned spaced apart by spacing equal to the spacing between neighboring fastening portions (16) among the plurality thereof provided to the connecting members (12), and which are situated between the fastening portions (16) of the connecting members (12) and the attaching portions (62) of the portal frames (14); and
fastening means (70, 72, 74; 78a, 88) which, with the plurality of portal frames (14) positioned by the positioning means (18, 66; 62, 86), fastens the plurality of fastening portions (16) of the connecting members (12) to the plurality of attaching portions (62) of the portal frames (14),
wherein the structure (10) is assembled by fastening the plurality of connecting members (12) to the plurality of portal frames (14) so that the plurality of portal frames (14) are connected together by the plurality of connecting members (12).

2. The plastic sheet house frame structure (10) according to claim 1,
wherein the fastening portions (16) of the connecting members (12) are provided with two interlocking faces (86) which face each other in the lengthwise direction of the connecting member (12); the positioning means (62, 86) is constituted by the two interlocking faces (86) and the two side faces of the attaching portions (62) which are positioned to either side of the plurality of portal frames (14) in the direction of spacing apart thereof; and with the fastening portion (16) of the connecting member (12) in a state of attachment to the attaching portion (62) of the portal frame (14), positioning of the plurality of portal frames (14) is carried out by respective interlocking of the two interlocking faces (86) with the two side faces of the attaching portions (62).

3. The plastic sheet house frame structure (10) according to claim 1 or 2, wherein at least the fastening portion (16) of the connecting member (12) or the attaching portion (62) of the portal frame (14) is furnished with a first positioning portion (66) which is composed of a projection, while at least the other is furnished with a second positioning portion (18) which is composed of an apertured or recessed portion into which the first positioning portion (66) is insertable; the positioning means (18, 66) is constituted by the first positioning portion (66) and the second positioning portion (18); and with the fastening portion (16) of the connecting member (12) in a state of attachment to the attaching portion (62) of the portal frame (14), positioning of the plurality of portal frames (14) in the lengthwise direction is carried out by inserting the first positioning portion (66) into the second positioning portion (18).

4. The plastic sheet house frame structure (10) according to any one of claims 1 - 3, wherein the fastening means (70, 72, 74) is constituted to include a clamping member (72) which, with the fastening portion (16) of the connecting member (12) in a state of attachment to the attaching portion (62) of the portal frame (14), will hold the fastening portion (16) clamped between itself and the attaching portion (62); a first mounting portion (70) composed of a projection which has been provided to at least either the clamping member (72) or the attaching portion (62) of the portal frame (14); and a second mounting portion (74) composed of a recessed or tubular portion provided to the other for mounting the clamping member (72) onto the attaching portion (62) through force fitting of the first mounting portion (70); and wherein with the clamping member (72) clamping the fastening portion (16) between itself and the attaching portion (62), the fastening portion (16) of the connecting member (12) is fastened to the attaching portion (62) of the portal frame (14) by mounting the clamping member (72) onto the attaching portion (62) by force fitting the first mounting portion (70) into the second mounting portion (74).

5. The plastic sheet house frame structure (10) according to claim 4,
wherein at least either the clamping member (72) which is mounted onto the attaching portion (62) of the portal frames (14), or the fastening portion (16) of the connecting member (12), is provided with a third positioning portion (66) composed of a projection; at least the other thereof is provided with a fourth positioning portion (18) composed of an apertured or recessed portion into which the third positioning portion (66) is insertable; the positioning means (18, 66) is constituted by the third positioning portion (66) and the fourth positioning portion (18); and with the fastening portion (16) of the connecting member (12) in a state of attachment to the attaching portion (62) of the portal frame (14), positioning of the plurality of portal frames (14) in the lengthwise direction is carried out by inserting the third positioning portion (66) into the fourth positioning portion (18).

6. The plastic sheet house frame structure (10) according to any one of claims 1-5, wherein at least either the fastening portion (16) of the connecting member (12) or the attaching portion (62) of the portal frame (14) is provided with a first locking portion (78a); at least the other of the fastening portion (16) of the connecting member (12) or the attaching portion (62) of the portal frame (14) is provided with a second locking portion (88) which, with the fastening portion (16) attached to the attaching portion (62), will lock with the first locking portion (78a) and prevent the fastening portion (16) and the attaching portion (62) from coming out of the attached state; the fastening means (78a, 88) is constituted by the first locking portion (78a) and the second locking portion (88); and the connecting member (12) is fastened to the portal frame (14) with the fastening portion (16) and the attaching portion (62) maintained in the attached state through locking of the second locking portion (88) with the first locking portion (78a).

7. The plastic sheet house frame structure (10) according to claim 6,
wherein the second locking portion (88) has an elastically deformable support post portion (90) and a locking claw (92) which is integrally projected from the distal end of the support post portion (90); when the fastening portion (16) of the connecting member (12) is attached to the attaching portion (62) of the portal frame (14), the first locking portion (78a) pushes the locking claw (92) of the second locking portion (88) inducing elastic deformation of the support post portion (90); and when the first locking portion (78a) has surmounted the locking claw (92), the support post portion (90) recovers, whereby the locking claw (92) locks with the first locking portion (78a).

8. The plastic sheet house frame structure (10) according to any one of claims 1-7, wherein at least either the fastening portion (16) of the connecting member (12) or the attaching portion (62) of the portal frame (14) is provided with a third mounting portion (70) composed of a projection; the other is provided with a fourth mounting portion (74) composed of a recessed or tubular portion into which the third mounting portion (70) is force fit; the fastening means (70, 74) is constituted by the third mounting portion (70) and the fourth mounting portion (74); and with the fastening portion (16) in a state of attachment to the attaching portion (62) the fastening portion (16) of the connecting member (12) is fastened to the attaching portion (62) of the portal frame (14) by force fitting the third mounting portion (70) into the fourth mounting portion (74).

9. The plastic sheet house frame structure (10) according to any one of claims 1-8, wherein the attaching portion (62) of the portal frame (14) is provided with a recessed groove (64) which extends in the direction in which the plurality of portal frames (14) are spaced apart; and the connecting member (12) is attached to the attaching portion (62) by fitting the fastening portion (16) of the connecting member (12) into the recessed groove (64); and
wherein, optionally, the connecting members (12) are composed of pipe members of circular cross section ;
or, optionally, the connecting members (12) are constituted to include two elongated flat plate portions (78a, 78b) which are spaced a prescribed distance apart and which extend parallel to one another; and two connector plate portions (80) which are situated between the opposed faces of the two flat plate portions (78a, 78b) and which are positioned orthogonally to the flat plate portions (78a, 78b) and extending in the lengthwise direction of the flat plate portions (78a, 78b), thereby connecting the two flat plate portions (78a, 78b) to one another.

10. The plastic sheet house frame structure (10) according to any one of claims 1-9, wherein the portal frame (14) has a divided structure which has been divided into multiple frame sections; and neighboring sections among these multiple frame sections are connected to one another by connecting means (40, 42) provided therebetween in order to constitute the portal frame (14).

11. The plastic sheet house frame structure (10) according to claim 10, wherein the portal frame (14) has a pair of leg portions (20) of prescribed length, and a connecting portion (22) which connects the pair of leg portions (20) together at a first lengthwise end thereof; the pair of leg portions (20) and the connecting portion (22) respectively have an elongated first frame section (24), with the first frame section (24) of each leg portion (20) and the first frame section (24) of the connecting portion (22) positioned to either side of a second frame section (26) which extends in a bow or curve; and neighboring sections among the first frame sections (24) and the second frame sections (26) are connected to one another by the connecting means (40, 42).

12. The plastic sheet house frame structure (10) according to claim 10,
wherein on at least a first end of the two lengthwise ends of the first frame section (24) and on at least a first end of the two lengthwise ends of the second frame section (26) there is formed an interlocking slot (40) which extends in a direction perpendicular to the lengthwise direction; on at least the other end of the two lengthwise ends of the first frame section (24) and on at least the other end of the two lengthwise ends of the second frame section (26) there is formed an interlocking projection (42) which is fittable within the interlocking slot (40); interlocking land portions (38, 46) are formed respectively on the inside face to the opening side of the interlocking slot (40) and on the outside face on the distal end side of the interlocking projection (42); the connecting means (40, 42) is constituted by the interlocking slot (40) and the interlocking projection (42) which respectively have these interlocking land portions (38, 46); and with the interlocking projection (42) fitted within the interlocking slot (40), the interlocking land portions (38, 46) interlock with one another and prevent the interlocking projection (42) from becoming dislodged from interlocking slot (40), thereby connecting the neighboring frame sections (24, 26) to one another.

13. The plastic sheet house frame structure (10) according to claim 12,
wherein only the interlocking slot (40) having the interlocking land portion (38) is formed at the respective first lengthwise end of the first frame section (24) and of the second frame section (26); and only the interlocking projection (42) having the interlocking land portion (46) is formed at the respective other lengthwise end of the first frame section (24) and of the second frame section (26).

14. The plastic sheet house frame structure (10) according to claim 13,
wherein the first frame sections (24) are composed of slotted first frame sections (24) on whose two lengthwise ends are formed only the interlocking slots (40) having the interlocking land portions (38), and projectioned first frame sections (24) on whose two lengthwise ends are formed only the interlocking projections (42) having the interlocking land portions (46); whereas the second frame sections (26) have formed respectively thereon on the two lengthwise ends thereof only the interlocking slot (40) having the interlocking land portions (38) or the interlocking projection (42) having the interlocking land portions (46).

15. A plastic sheet house furnished with a frame (10) having the frame structure (10) as defined in any one of claims 1-14, and with a plastic sheet spread over the frame (10) from above.
